# EUROPÄISCHE PATENTSCHRIFT

(11) **EP 2 030 976 B1**
(45) Veröffentlichungstag und Bekanntmachung des Hinweises auf die Patenterteilung: **19.06.2013**
(21) Anmeldenummer: 07017077.4
(22) Anmeldetag: 31.08.2007
(51) Int. Cl.: C07F 7/18, C08K 5/5425

(54) **Härter für Siliconkautschukmassen**
Hardener for silicone rubber mass
Durcisseur pour masses en caoutchouc silicone

(43) Veröffentlichungstag der Anmeldung: 04.03.2009
(73) Patentinhaber: Nitrochemie Aschau GmbH, 84544 Aschau am Inn (DE)
(72) Erfinder: Ederer, Theodor, Dr., 84539 Zangberg (DE); Knott, Thomas, Dr., 84453 Mühldorf a. Inn (DE); Pichl, Ulrich, 84544 Aschau a.Inn (DE); Schmidt, Gerhard, Dr., 84453 Mühldorf a. Inn (DE); Waldmann, Ludwig, Dr., 84453 Mühldorf a. Inn (DE)
(74) Vertreter: Lieck, Hans-Peter

(56) Entgegenhaltungen:
- US-A- 4 552 942
- M.M.SPRUNG: "Some alpha-Carbalkoxysilanes" THE JOURNAL OF ORGANIC CHEMISTRY, Bd. 23, 15. April 1958 (1958-04-15), Seiten 1530-1534, XP002461949

## Beschreibung

Kalthärtende Siliconkautschukmassen, auch RTV-(Raumtemperaturvernetzende)-Siliconkautschukmassen genannt, sind schon lange als maßgeschneiderte Werkstoffe mit elastischen Eigenschaften bekannt. Sie werden allgemein als Dichtungsmassen oder Klebstoffe für Glas, Porzellan, Keramik, Stein, Kunststoffe, Metalle, Holz usw. eingesetzt, z.B. als Fugen- oder Dichtungsmassen im Bauwesen und im Sanitärbereich, oder als Beschichtungsmaterialien, z.B. in der Elektronikindustrie, (Römpp Chemie Lexikon, CD ROM, Version 2.0, Hrsg. J.Falbe, Thieme-Verlag, Stuttgart 1999 sowie Ullmanns Enzyklopädie der Technischen Chemie, 4. Auflage, Hrsg. E. Bartholome, Verlag Chemie, Weinheim 1982, Band 21, S. 511 ff.). Insbesondere werden Einkomponenten-RTV-Siliconkautschukmassen (RTV-1) eingesetzt; dabei handelt es sich beispielsweise um plastisch formbare Mischungen aus α,ω-Dihydroxypolyorganosiloxanen und geeigneten Härtern bzw. Vernetzungsmitteln, die unter Feuchtigkeitsausschluß aufbewahrt werden können, aber unter dem Einfluß von Wasser oder Luftfeuchtigkeit bei Raumtemperatur polymerisieren.

Vorzugsweise werden in Abhängigkeit von der gewünschten Polymerisationsgeschwindigkeit und den gewünschten chemischen und physikalischen Eigenschaften des Polymerisationsproduktes, wie z.B. dem gewünschten Vernetzungsgrad, der Lösemittelresistenz usw., verschiedene polyfunktionelle, z.B. tri- und/oder tetrafunktionelle, Härter zusammen mit verschiedenen difunktionellen oder mehrere funktionelle Gruppen tragenden Polyorganosiloxane verwendet. Dabei werden besonders häufig α,ω-Dihydroxypolyorganosiloxane als difunktionelle Polyorganosiloxane eingesetzt. Die Polymerisation erfolgt in der Regel durch die Kondensation von SiOH-Gruppen, die intermediär durch die Hydrolyse von geeigneten hydrolysierbaren SiX-Gruppen der Härter gebildet werden. Anhand der bei der Hydrolyse freigesetzten Austrittsgruppen (HX) wird bei RTV-1-Siliconkautschukmassen unterschieden zwischen sauren (HX = Säuren, wie z.B. Essigsäure), basischen (z.B. HX = Amine) und neutralen (z.B. HX = Alkohol oder Oxim) Systemen. Da sowohl saure als auch basische RTV-1-Kautschukmassen bei der Vernetzung aggressive Verbindungen freisetzen, die z.B. Metalle, Stein oder Mörtel korrodieren oder zersetzen können, werden für moderne RTV-1-Siliconkautschukmassen häufig neutralvernetzende Systeme verwendet. So werden beispielsweise neutralvernetzende Alkoxysilan-Härter verwendet, die auf den Abgangsgruppen Methanol und Ethanol basieren. Allerdings weisen die auf dem Markt erhältlichen Alkoxysysteme Probleme bei der Lagerstabilität sowie bezüglich der Haftung der polymerisierten Kautschukmassen auf. Daher werden verstärkt Oximosilan-Härter verwendet, die unter Abgabe eines Alkanonoxims hydrolysieren. Besonders Härter, die unter Abgabe von Butan-2-onoxim (bzw. Methyl-Ethyl-Ketoxim, MEKO) hydrolysieren, werden zur Zeit vielfach verwendet.

Nach neueren Erkenntnissen kann Butan-2-onoxim jedoch Krebs erzeugen, so dass eine weitere Verwendung von Butan-2-onoximabgebenden Verbindungen vom gesundheitlichen Standpunkt her grundsätzlich abzulehnen ist. Aus diesem Grunde muss Butan-2-onoxim seit 2004 mit dem R-Satz R40 ("Verdacht auf krebserzeugende Wirkung") gekennzeichnet werden. Entsprechend unterliegen auch Siliconkautschukmassen, die freies Butan-2-onoxim in einer bestimmte Grenzwerte überschreitenden Konzentration enthalten, dieser Kennzeichnungspflicht; diese Kennzeichnungspflicht umfasst besonders Siliconkautschukmassen, wie z.B. solche in Dichtstoffkartuschen, solange der Gehalt an freiem Butan-2-onoxim nicht kleiner als 1% ist (vgl. "Mischungsregel" der Zubereitungs-Richtlinie, s. Richtlinie 2006/8/EG der Kommission vom 23.01.2006, Amtsblatt der Europäischen Union vom 24.01.2006).

Praktisch alle der oben genannten üblichen Härter haben den weiteren, auch gesundheitlichen Nachteil, daß die bei der Vernetzung freigesetzten Verbindungen übel, teilweise sehr übel riechen, was insbesondere bei der Verarbeitung in geschlossenen Räumen eine große Belästigung bedeutet.

US-A-4,552,942 und M.M. Sprung: "Some alpha-Carbalkoxysilanes", THE JOURNAL OF ORGANIC CHEMISTRY, Bd. 23, 15. April 1958, Seiten 1530-1534 beschreiben andere Silanhärter.

Für das Konfektionieren der Siliconkautschukmasse ist es wichtig, daß der Härter bei Raumtemperatur und am besten auch bei noch deutlich tieferen Temperaturen flüssig ist, damit sich der Härter einfach und zuverlässig handhaben und homogen mit der eigentlichen Siliconkautschukmasse bzw. deren Ausgangsstoffen vermischen läßt. Bleibt der Härter auch nach einem Transport im Winter bei Minustemperaturen flüssig, erspart das beim Konfektionieren ein zeit- und energieaufwendiges Aufschmelzen.

Weiterhin sollte der Härter zu einer möglichst vollständigen Polymerisation der Kautschukmasse führen, um das nachträgliche "Ausbluten" von unvollständig abreagierten Ausgangsstoffen etc. zu verhindern. Schließlich sollte das Polymerisationsprodukt nach abgeschlossener Härtung der Siliconkautschukmasse transparent bzw. klar sein.

Es ist deshalb eine Aufgabe der Erfindung, einen verbesserten Härter für Siliconkautschukmassen bereitzustellen, bei dem die dem Stand der Technik eigenen Nachteile beseitigt oder jedenfalls reduziert sind.

Die Aufgabe der Erfindung wird durch den Gegenstand der unabhängigen Ansprüche gelöst. Bevorzugte Ausführungsformen sind Gegenstand der abhängigen Ansprüche.

Gegenstand der Erfindung ist somit ein verbesserter Härter für Siliconkautschukmassen, die Verwendung des erfindungsgemäßen Härters zum Härten von Siliconkautschukmassen, eine den Härter umfassende Zusammensetzung, die Verwendung derselben, sowie ein Verfahren zur Herstellung des Härters.

Insbesondere ist der Gegenstand der Erfindung ein Härter für Siliconkautschukmassen, umfassend mindestens eine Verbindung mit der allgemeinen Formel Si(R¹)₃R² (I), wobei die Reste R¹ 2-Hydroxypropionsäurealkylester-Reste mit der allgemeinen Formel -OCH(CH₃)COOR sind, wobei der Rest R ein optional substituierter, geradkettiger oder verzweigter Alkylrest mit 1 bis 4 Kohlenstoffatomen ist und wobei der Rest R² ausgewählt wird aus der Gruppe, bestehend aus einem optional substituierten, geradkettigen oder verzweigten Alkenylrest mit mindestens zwei Kohlenstoffatomen. und eine davon unterschiedliche Verbindung mit der allgemeinen Formel Si(R³₎ₙR4ₘ (II), mit n = 1, 2, 3 oder 4, und m = (4-n), wobei der oder die Reste R³ 2-Hydroxypropionsäurealkylester-Reste mit der allgemeinen Formel -OCH(CH₃)COOR sind, wobei der Rest R ein optional substituierter, geradkettiger oder verzweigter Alkylrest mit 1 bis 4 Kohlenstoffatomen ist und wobei der oder die Reste R⁴ unabhängig voneinander ausgewählt werden aus der Gruppe, bestehend aus einem optional substituierten, geradkettigen oder verzweigten Alkylrest mit mindestens einem Kohlenstoffatom, einem optional substituierten, geradkettigen oder verzweigten Alkenyl- und Alkinylrest mit jeweils mindestens zwei Kohlenstoffatomen, einem optional substituierten Cycloalkylrest mit mindestens drei Kohlenstoffatomen und einem optional substituierten Arylrest mit mindestens fünf Kohlenstoffatomen.

In der allgemeinen Formel (I) bedeutet der zur Beschreibung des Restes R¹ verwendete Begriff "2-Hydroxypropionsäurealkylester-Rest" einen Substituenten der Silanverbindung (I), der durch Kondensieren einer entsprechenden Silanolverbindung mit einem Molekül 2-Hydroxypropionsäurealkylester (auch Milchsäurealkylester oder Alkyllactat genannt) erhalten wird, wobei eine Si-O-Bindung zwischen dem zentralen Siliciumatom der Silanverbindung und dem Sauerstoffatom der freien Hydroxyfunktion der mit einem Alkohol veresterten 2-Hydroxypropionsäure ausgebildet wird. Der 2-Hydroxypropionsäurealkylester-Rest R¹ wird durch die allgemeine Formel -OCH(CH₃)COOR dargestellt, wobei der Rest R ein optional substituierter, geradkettiger oder verzweigter Alkylrest mit 1 bis 4 Kohlenstoffatomen ist. Bevorzugt ist der Alkyl-Rest R ein Methyl-, Ethyl-, Propyl- oder Isopropylrest, und besonders bevorzugt ein Ethylrest. Entsprechend ist der Rest R¹ bevorzugt ein 2-Hydroxypropionsäuremethylesterrest, ein 2-Hydroxypropionsäureethylesterrest, ein 2-Hydroxypropionsäurepropylesterrest, oder ein 2-Hydroxypropionsäureisopropylesterrest. Besonders bevorzugt ist der Rest R¹ ein 2-Hydroxypropionsäureethylesterrest (Ethyllactato-Rest).

Im Sinne dieser Erfindung umfasst der Begriff "2-Hydroxypropionsäurealkylester-Rest" alle Stereoisomere (Enantiomere) des entsprechenden 2-Hydroxypropionsäurealkylesters, insbesondere den reinen (R)-2-Hydroxypropionsäurealkylester und den reinen (S)-2-Hydroxypropionsäurealkylester, sowie Mischungen davon, einschließlich einer racemischen Mischung. Beispielsweise umfasst im Sinne dieser Erfindung der
2-Hydroxypropionsäureethylester den reinen
(R)-2-Hydroxypropionsäureethylester (D-(+)-Milchsäureethylester) und den reinen (S)-2-Hydroxypropionsäureethylester (L-(-)-Milchsäureethylester), sowie Mischungen davon, einschließlich einer racemischen Mischung.

Allgemein zeichnen sich die Alkyl-Ester der 2-Hydroxypropionsäure (Milchsäure) durch bevorzugte Eigenschaften aus, wie z.B. Geruch, Stabilität, Verträglichkeit etc. So hat beispielsweise der Ethylester ("Ethyllactat") einen milden fruchtigen Geruch. Der Ethylester der 2-Hydroxypropionsäure (Milchsäureethylester oder Ethyllactat) ist darüber hinaus auch als Lebensmittelzusatzstoff zugelassen. Die 2-Hydroxycarbonsäure ist ein Natur- bzw. Stoffwechselprodukt und als solche nicht gefährlich für den menschlichen bzw. einen tierischen oder pflanzlichen Organismus. Gleiches gilt auch für ihren Ethylester.

Der erfindungsgemäße Härter ist ein neutralvernetzender Härter für Siliconkautschukmassen, der im Gegensatz zu üblichen Härtern viele Vorteile aufweist und als Ersatz für die üblichen Härter verwendet werden kann. Ein Vorteil der Verbindung mit der allgemeinen Formel (I) ist es, dass sie bei der Hydrolyse nur 2-Hydroxypropionsäureethylester (Ethyllactat) abgibt, welcher unschädlich für die Umgebung sowie den menschlichen bzw. tierischen Organismus, und Pflanzen ist. Der Ethylester der 2-Hydroxypropionsäure (Ethyllactat) ist sogar als ein Lebensmittelzusatzstoff zugelassen (s. Römpp Lexikon Chemie - Version 2.0, Stuttgart/New York: Georg Thieme Verlag 1999; bzZitat: Milchsäureethylester (Ethyllactat) bzw. Liste der zugelassenen Lebensmittelzusatzstoffe (Fundstellenliste) vom 10.Juni 1992).

Daher sind die toxikologischen Eigenschaften der Abgangsgruppe des erfindungsgemäßen Härters wesentlich besser als die von Oximhärtern. Außerdem wird der Geruch sowohl des erfindungsgemäßen Härters selbst, als auch der ihn umfassenden Siliconkautschukmassen von den meisten Menschen als angenehm empfunden, was von den eher übelriechenden Oxim-Härtern nicht gesagt werden kann. Der angenehme Geruch des erfindungsgemäßen Härters überträgt sich auch auf damit gefertigte Dichtstoffe. Darüber hinaus wurde überraschend gefunden, dass Verbindungen der allgemeinen Formel (I), die 2-Hydroxypropionsäureethylester-Reste umfassen, einem erfindungsgemäßen Härter besonders vorteilhafte Eigenschaften verleihen, insbesondere bezüglich Schmelzpunkt des Härters, der Lagerstabilität und Polymerisationsgeschwindigkeit einer diesen umfassenden Siliconkautschukmasse, sowie der Eigenschaften des daraus entstehenden Polymerisationsproduktes, wie beispielsweise Hafteigenschaften oder Klarheit bzw. Farblosigkeit. Dies ist besonders im Hinblick auf die schlechten Eigenschaften der neutralvernetzenden Alkoxyhärter überraschend, da in beiden Fällen Hydroxygruppen Bestandteile der durch die Hydrolyse gespaltenen Bindungen sind. Insbesondere bezüglich der Lagerstabilität und der Hafteigenschaften der Siliconkautschukmassen, welche die entsprechenden Härter enthalten, ist der erfindungsgemäße Härter den üblichen Alkoxyhärtern deutlich überlegen.

In der allgemeinen Formel (I) bezeichnet der Begriff "Alkenylrest" einen Molekülrest R² auf Basis einer teilweise ungesättigten aliphatischen Kohlenwasserstoffverbindung, die mindestens eine C-C-Doppelbindung umfasst. Bevorzugt umfasst der Alkenylrest eine, zwei oder drei C-C-Doppelbindungen, besonders bevorzugt eine C-C-Doppelbindung. Ein "Alkenylrest mit mindestens zwei Kohlenstoffatomen" umfasst bevorzugt 2 bis 8 Kohlenstoffatome, weiter bevorzugt 2 bis 6 Kohlenstoffatome, und besonders bevorzugt 2 bis 4 Kohlenstoffatome. Der Begriff "Alkenylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, insbesondere durch Stellung der Substituenten an den Kohlenstoffatomen der C-C-Doppelbindung, umfasst der Begriff "Alkenylrest" nicht nur eine racemische Mischung, sondern auch die reinen Enantiomere und/oder Diastereomere, sowie Mischungen davon. Der "Alkenylrest" ist bevorzugt über eine Si-C-Bindung mit der Verbindung mit der allgemeinen Formel (I) verbunden. Insbesondere umfasst der Begriff "Alkenylrest mit mindestens zwei Kohlenstoffatomen" einen Allyl- oder einen Vinylrest.

Erfindungsgemäß umfasst der Härter mindestens eine Verbindung mit der allgemeinen Formel (I). Bevorzugt umfasst der erfindungsgemäße Härter 1 bis 5 Verbindungen der allgemeinen Formel (I), weiter bevorzugt 1 bis 3 Verbindungen der allgemeinen Formel (I), noch weiter bevorzugt 1 oder 2 Verbindungen der allgemeinen Formel (I), und besonders bevorzugt 2 Verbindungen der allgemeinen Formel (I). Durch einen erfindungsgemäßen Härter, der zwei, drei oder mehr Verbindungen der allgemeinen Formel (I) umfasst, können vorteilhaft sowohl die Polymerisationsgeschwindigkeit einer Siliconkautschukmasse, die einen erfindungsgemäßen Härter umfasst, als auch die Eigenschaften des entstehenden Polymerisationsproduktes eingestellt werden. Falls gewünscht, kann der erfindungsgemäße Härter auch 3, 4, 5 oder mehr Verbindungen der allgemeinen Formel (I) umfassen, um so Eigenschaften, wie z.B. die Polymerisationsgeschwindigkeit einer Siliconkautschukmasse, die einen erfindungsgemäßen Härter umfasst, oder die Eigenschaften des entstehenden Polymerisationsproduktes gemäß der Anforderungen der jeweiligen beabsichtigten Anwendung maßgeschneidert einzustellen.

Der erfindungsgemäße Härter oder Vernetzer für Silikonkautschukmassen ist in der Lage, in Gegenwart von Wasser oder Luftfeuchtigkeit mit di- oder mehr-funktionellen Polyorganosiloxanverbindungen unter Ausbildung von Si-O-Si-Bindungen zu polymerisieren bzw. zu kondensieren. Bevorzugt werden dabei α,ω-Dihydroxypolyorganosiloxane als difunktionelle Polyorganosiloxanverbindungen verwendet. Somit bedeutet im vorliegenden Zusammenhang eine Siliconkautschukmasse bevorzugt eine Zusammensetzung, die den Härter und di- oder mehrfunktionelle Polyorganosiloxanverbindungen umfaßt.

Überraschend wurde gefunden, daß der erfindungsgemäße Härter eine verbesserte Wirkung beim Härten von Siliconkautschukmassen in Gegenwart von Wasser oder Luftfeuchtigkeit bei Raumtemperatur hat. Insbesondere hat er den Vorteil, daß er bei Hydrolyse ein Alkyllactat-Molekül, bevorzugt ein Ethyllactat-Molekül (2-Hydroxypropionsäureethylester) abgibt. Ethyllactat ist eine ungefährliche Verbindung, die z.B. ein Natur- bzw. Stoffwechselprodukte oder ein Derivat davon sein kann. Im Gegensatz zu Härtern, die Butanonoxim abgeben, sind deshalb die mit einem erfindungsgemäßen Härter hergestellten Siliconkautschukmassen nicht gefährlich. Auch ist Ethyllactat weder korrosiv, noch überhaupt aggressiv gegenüber Werkstoffen wie Metallen, Mörtel oder Stein (Mamor usw.). Ethyllactat hat außerdem einen angenehmen Geruch, gerade im Vergleich zu allen gebräuchlichen Oximen, insbesondere Butanonoxim.

Der neue Härter ist bis -20°C flüssig und deshalb bequem zu verarbeiten.

Die Polymerisationsprodukte, die unter Verwendung des erfindungsgemäßen Härters hergestellt werden, sind stippenfrei, transparent und klar.

Bevorzugt ist der Rest R² der Verbindung mit der allgemeinen Formel (I) ein Alkenylrest gemäß der oben stehenden Definition. Bevorzugt ist der Alkenylrest ein Allylrest oder ein Vinylrest, besonders bevorzugt ein Vinylrest. Eine derartiger Alkylenrest kann unter geeigneten Bedingungen eine zusätzliche Vernetzung mit einem ebenfalls derartige Alkylengruppen enthaltenden Siliconkautschukmonomer bzw. -polymer ausbilden, was zu Polymerisationsprodukten mit besonders vorteilhaften Eigenschaften führen kann. Außerdem wurde überraschend gefunden, dass Verbindungen der allgemeinen Formel (I), die einen so definierten Alkenylrest umfassen, einem erfindungsgemäßen Härter besonders vorteilhafte Eigenschaften verleihen, insbesondere bezüglich dem Schmelzpunkt des Härters, der Polymerisationsgeschwindigkeit einer diesen enthaltenden Siliconkautschukmasse, sowie der Eigenschaften des daraus entstehenden Polymerisationsproduktes, wie beispielsweise dessen Klarheit bzw. Farblosigkeit.

Dies ist besonders deshalb überraschend, weil Verbindungen, die anstelle des Alkenylrestes R² einen Rest, wie z.B. einen Alkylrest oder einen Arylrest, neben drei Alkyllactato-Resten enthalten, wenn sie rein als Härter für Siliconkautschukmassen verwendet werden, schlechte Eigenschaften zeigen. Untersuchungen haben gezeigt, dass beispielsweise Alkyl-tris-(ethyllactato)-silane, wie z.B. Methyl-tris-(ethyllactato)-silan oder Ethyltris-(ethyllactato)-silan, oder Aryl-tris-(ethyllactato)-silane, wie z.B. Phenyl-tris-(ethyllactato)-silan, wenn sie rein als Härter in einer Siliconkautschukmasse, insbesondere einer RTV-Siliconkautschukmasse, verwendet werden, zu einer sehr langsamen Polymerisationsgeschwindigkeit und dadurch bedingten schlechten Eigenschaften des Polymerisationsproduktes führen, so dass eine Verwendung, z.B. als Dichtstoff, nicht möglich ist. Die Erfinder der vorliegenden Erfindung haben gefunden, dass, im Gegensatz zu diesen Verbindungen, die Verwendung der erfindungsgemäßen Härter bei Siliconkautschukmassen zu guten Polymerisationsgeschwindigkeiten und Polymerisationsprodukten mit besonders vorteilhaften Eigenschaften führt.

Besonders bevorzugt wird der Rest R² aus der Gruppe ausgewählt, die aus einem Allyl- und einem Vinylrest besteht. Insbesondere ist ein Rest R² bevorzugt, der ein Vinylrest ist. Erfindungsgemäße Härter mit einem dieser Reste R² zeichnen sich durch besonders vorteilhafte Eigenschaften aus.

In einer besonders bevorzugten Ausführungsform umfasst der erfindungsgemäße Härter als Verbindung mit der allgemeinen Formel (I) die Verbindung Vinyl-tris(ethyllactato)silan (Formel 1).

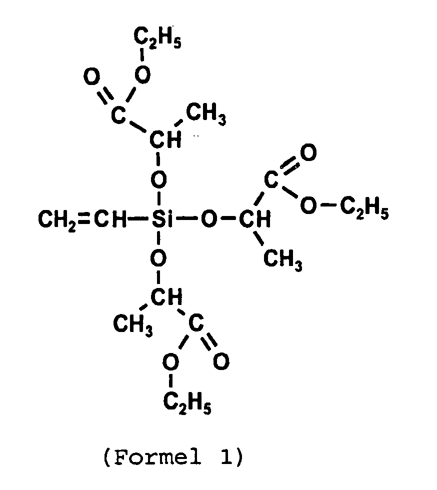

In der allgemeinen Formel (II) bedeutet der zur Beschreibung des Restes R³ verwendete Begriff "2-Hydroxypropionsäurealkylester-Rest" einen Substituenten der Silanverbindung (II), der durch Kondensieren einer entsprechenden Silanolverbindung mit einem Molekül eines 2-Hydroxypropionsäurealkylesters (auch Milchsäurealkylester oder Alkyllactat genannt) erhalten wird, wobei eine Si-O-Bindung zwischen dem zentralen Siliciumatom der Silanverbindung und dem Sauerstoffatom der freien Hydroxyfunktion der mit einem Alkohol veresterten 2-Hydroxypropionsäure ausgebildet wird. Der 2-Hydroxypropionsäurealkylester-Rest R¹ wird durch die allgemeine Formel -OCH(CH₃)COOR dargestellt, wobei der Rest R ein optional substituierter, geradkettiger oder verzweigter Alkylrest mit 1 bis 4 Kohlenstoffatomen ist. Bevorzugt ist der Alkyl-Rest R ein Methyl-, Ethyl-, Propyl- oder Isopropylrest, und besonders bevorzugt ein Ethylrest. Entsprechend ist der Rest R¹ bevorzugt ein 2-Hydroxypropionsäuremethylesterrest, ein 2-Hydroxypropionsäureethylesterrest, ein 2-Hydroxypropionsäurepropylesterrest, oder ein 2-Hydroxypropionsäureisopropylesterrest. Besonders bevorzugt ist der Rest R¹ ein 2-Hydroxypropionsäureethylesterrest.

Im Sinne dieser Erfindung umfasst der Begriff "2-Hydroxypropionsäurealkylester-Rest" alle Stereoisomere (Enantiomere) des entsprechenden 2-Hydroxypropionsäurealkylesters, insbesondere den reinen (R)-2-Hydroxypropionsäurealkylester und den reinen (S)-2-Hydroxypropionsäurealkylester, sowie Mischungen davon, einschließlich einer racemischen Mischung. Beispielsweise umfasst im Sinne dieser Erfindung der 2-Hydroxypropionsäureethylester den reinen (R)-2-Hydroxypropionsäureethylester (D-(+)-Milchsäureethylester) und den reinen (S)-2-Hydroxypropionsäureethylester (L-(-)-Milchsäureethylester), sowie Mischungen davon, einschließlich einer racemischen Mischung.

In der allgemeinen Formel (II) bezeichnet der Begriff "Alkylrest" einen Molekülrest R⁴ auf Basis einer gesättigten aliphatischen Kohlenwasserstoffverbindung. Ein "Alkylrest mit mindestens einem Kohlenstoffatom" umfasst bevorzugt eine Kohlenwasserstoffverbindung mit 1 bis 8 Kohlenstoffatomen, weiter bevorzugt 1 bis 6 Kohlenstoffatomen, weiter bevorzugt 1 bis 4 Kohlenstoffatomen, und besonders bevorzugt 1 oder 2 Kohlenstoffatomen. Der Begriff "Alkylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, umfasst der Begriff "Alkylrest" nicht nur eine racemische Mischung, sondern auch die reinen Enantiomere und/oder Diastereomere, sowie Mischungen davon. Der "Alkylrest" ist bevorzugt über eine Si-C-Bindung mit der Verbindung mit der allgemeinen Formel (1) verbunden. Insbesondere umfasst der Begriff "Alkylrest mit mindestens einem Kohlenstoffatom" einen Methyl-, Ethyl-, Propyl-, Isopropyl-, Butyl-, Isobutyl-, sec-Butyl- und tert-Butylrest.

Die Begriffe "Alkenylrest" und "Alkinylrest" umfassen jeweils einen Molekülrest R⁴ auf Basis einer teilweise ungesättigten aliphatischen Kohlenwasserstoffverbindung, die im Falle des Alkenylrestes mindestens eine C-C-Doppelbindung und im Falle des Alkinylrestes mindestens eine C-C-Dreifachbindung umfasst. Ein "Alkenylrest mit mindestens zwei Kohlenstoffatomen" bzw. ein "Alkinylrest mit mindestens zwei Kohlenstoffatomen" umfasst bevorzugt 2 bis 8 Kohlenstoffatome, weiter bevorzugt 2 bis 6 Kohlenstoffatome, und besonders bevorzugt 2 bis 4 Kohlenstoffatome. Der Begriff "Alkenylrest" bzw. "Alkinylrest" umfasst sowohl geradkettige, als auch verzweigte Kohlenwasserstoffketten. Sofern durch Verzweigungen und/oder Substitutionen der Kohlenwasserstoffkette Stereoisomere möglich sind, umfasst der Begriff "Alkenylrest" bzw. "Alkinylrest" nicht nur eine racemische Mischung, sondern auch die reinen Enantiomere und/oder Diastereomere, sowie Mischungen davon. Der "Alkenylrest" bzw. "Alkinylrest" ist bevorzugt über eine Si-C-Bindung mit der Verbindung mit der allgemeinen Formel (II) verbunden. Insbesondere umfasst der Begriff "Alkenylrest mit mindestens zwei Kohlenstoffatomen" einen Allyl- und einen Vinylrest, und der Begriff "Alkinylrest" umfasst insbesondere einen Ethinylrest (Acetylenylrest).

Der Begriff "Cycloalkylrest" bezeichnet einen Molekülrest R⁴ auf Basis einer cyclischen, gesättigten oder teilweise ungesättigten aliphatischen Kohlenwasserstoffverbindung. Ein "Cycloalkylrest mit mindestens drei Kohlenstoffatomen" umfasst bevorzugt 3 bis 8 Kohlenstoffatome, weiter bevorzugt 3 bis 6 Kohlenstoffatome, noch weiter bevorzugt 4 bis 6 Kohlenstoffatome, und besonders bevorzugt 5 oder 6 Kohlenstoffatome. Der Begriff "Cycloalkylrest" umfasst auch Kohlenwasserstoffringe, die mit geradkettigen und/oder verzweigten Kohlenwasserstoffketten substituiert sind. Sofern durch Verzweigungen und/oder Substitutionen des Kohlenwasserstoffringes Stereoisomere möglich sind, umfasst der Begriff "Cycloalkylrest" nicht nur eine racemische Mischung, sondern auch die reinen Enantiomere und/oder Diastereomere, sowie Mischungen davon. Der "Cycloalkylrest" ist bevorzugt über eine Si-C-Bindung mit der Verbindung mit der allgemeinen Formel (II) verbunden. Insbesondere umfasst der Begriff "Cycloalkylrest mit mindestens drei Kohlenstoffatomen" einen Cyclopropyl-, Cyclobutyl-, Cyclopentyl- und Cyclohexylrest.

In der allgemeinen Formel (II) bezeichnet der Begriff "Arylrest" einen Molekülrest R⁴ auf Basis einer aromatischen Kohlenwasserstoffverbindung. Ein "Arylrest mit mindestens fünf Kohlenstoffatomen" umfasst bevorzugt eine aromatische Kohlenwasserstoffverbindung mit 5 bis 12 Kohlenstoffatomen, weiter bevorzugt 6 bis 12 Kohlenstoffatomen, und besonders bevorzugt 6 bis 10 Kohlenstoffatomen. Der Arylrest mit sechs Kohlenstoffatomen kann in der Verbindung mit der allgemeinen Formel (II) auch ein unsubstituierter Phenylrest gemäß obiger Definition sein. Der Begriff "Arylrest" umfasst aromatische Ringsysteme mit einem, zwei, drei oder mehr Ringen, die sowohl über C-C-Einfachbindungen, als auch über gemeinsame Kanten miteinander verbunden sein können. Der "Arylrest" ist bevorzugt über eine Si-C-Bindung mit der Verbindung mit der allgemeinen Formel (II) verbunden. Insbesondere umfasst der Begriff "Arylrest mit mindestens fünf Kohlenstoffatomen" einen Cyclopentadienyl-, Phenyl-, Naphthyl-, und Diphenylrest.

Die Verbindung mit der allgemeinen Formel (II) kann entsprechend obiger Definition genau einen (n=1), zwei (n=2), drei (n=3) oder vier (n=4) 2-Hydroxypropionsäurealkylester-Reste, bevorzugt 2-Hydroxypropionsäureethylester-Reste umfassen, wobei entsprechend drei (m=3, bei n=1), zwei (m=n=2) bzw. einen (m=1, bei n=3) Reste R⁴ umfasst werden. Sofern eine Verbindung mit der allgemeinen Formel (II) zwei oder drei Reste R⁴ umfasst, können diese voneinander verschieden sein, d.h. unabhängig voneinander aus einem Alkylrest mit mindestens einem Kohlenstoffatom, einem Alkenyl- und Alkinylrest mit jeweils mindestens zwei Kohlenstoffatomen, einem Cycloalkylrest mit mindestens drei Kohlenstoffatomen und einem Arylrest mit mindestens fünf Kohlenstoffatomen ausgewählt werden.

In einer bevorzugten Ausführungsform der Verbindung mit der allgemeinen Formel (II) ist n=3 und m=1 oder n=m=2, d.h. die Verbindung mit der allgemeinen Formel (II) umfasst neben 2-Hydroxypropionsäurealkylester-Resten R³ einen oder zwei zusätzliche Reste R⁴ gemäß der oben ausgeführten Definition. Besonders bevorzugt ist der Rest R⁴ der Verbindung mit der allgemeinen Formel (II) ein Alkyl- oder Alkenylrest gemäß der oben stehenden Definition. Besonders bevorzugt wird der Rest R⁴ aus einem Methyl-, Ethyl-, Propyl-, Isopropyl-, Butyl-, Isobutyl-, sec-Butyl-, tert-Butyl-, Allyl-, Vinyl-, Cyclopentyl-, Cyclohexyl-, Phenyl-, und Diphenylrest ausgewählt, und ganz besonders bevorzugt aus einem Methyl-, Ethyl-, Vinyl-, Phenyl- und Isopropylrest. Ein Vinylrest kann unter geeigneten Bedingungen eine zusätzliche Vernetzung mit einem ebenfalls derartige Alkylengruppen enthaltenden Siliconkautschukmonomer bzw. -polymer ausbilden, was zu Polymerisationsprodukten mit besonders vorteilhaften Eigenschaften führen kann. In einer ebenfalls bevorzugten Ausführungsform umfasst die Verbindung mit der allgemeinen Formel (II) mit n=m=2 zwei voneinander verschiedene Reste R⁴, die unabhängig voneinander aus den oben genannten Resten R⁴ ausgewählt werden. Bevorzugt umfasst eine derartige Verbindung mit der allgemeinen Formel (II) einen Alkylrest und einen Alkenylrest, wie beispielsweise einen Ethyl- und einen Vinylrest, oder einen Alkylrest und einen Arylrest, wie beispielsweise einen Ethyl- und einen Phenylrest.

Erfindungsgemäße Härter mit einem oder zwei dieser Reste R⁴ zeichnen sich durch besonders vorteilhafte Eigenschaften aus. So wurde überraschend gefunden, dass Verbindungen der allgemeinen Formel (II), die einen oder zwei der so definierten Rest R⁴ umfassen, einem erfindungsgemäßen Härter besonders vorteilhafte Eigenschaften verleihen, insbesondere bezüglich Schmelzpunkt des Härters, der Polymerisationsgeschwindigkeit einer diesen enthaltenden Siliconkautschukmasse, sowie der Eigenschaften des daraus entstehenden Polymerisationsproduktes, wie beispielsweise dessen Klarheit bzw. Farblosigkeit.

In einer alternativen bevorzugten Ausführungsform der Verbindung mit der allgemeinen Formel (II) ist n=4 (und entsprechend m=0), d.h. die Verbindung mit der allgemeinen Formel (II) umfasst nur 2-Hydroxypropionsäurealkylester-Reste, bevorzugt nur 2-Hydroxypropionsäureethylester-Reste (R³), und keine weiteren Reste R⁴. Diese Verbindung mit der allgemeinen Formel (II) verleiht dem erfindungsgemäßen Härter die Eigenschaft, besonders hoch vernetzte Siliconkautschukpolymere auszubilden. Ein bevorzugtes Beispiel dieser Ausführungsform der Verbindung mit der allgemeinen Formel (II) ist die Verbindung Tetra-(ethyllactato)-silan.

Der erfindungsgemäße Härter umfasst gemäß der hier beschriebenen Ausführungsform mindestens zwei voneinander unterschiedliche Verbindungen. Dabei umfasst der erfindungsgemäße Härter mindestens eine Verbindung mit der allgemeinen Formel (I) und mindestens eine Verbindung mit der allgemeinen Formel (II). Weiter bevorzugt umfasst der erfindungsgemäße Härter mindestens zwei Verbindungen mit der allgemeinen Formel (I), oder mindestens eine Verbindung mit der allgemeinen Formel (I) und mindestens eine Verbindung mit der allgemeinen Formel (II). Besonders bevorzugt umfasst der erfindungsgemäße Härter zwei Verbindungen mit der allgemeinen Formel (I), oder eine Verbindung mit der allgemeinen Formel (I) und eine Verbindung mit der allgemeinen Formel (II), oder eine Verbindung mit der allgemeinen Formel (I) und zwei Verbindungen mit der allgemeinen Formel (II).

Durch einen erfindungsgemäßen Härter, der mindestens zwei voneinander unterschiedliche Verbindungen umfasst, die wie angegeben aus Verbindungen mit der allgemeinen Formel (I) und Verbindungen mit der allgemeinen Formel (II) ausgewählt werden, können vorteilhaft sowohl die Polymerisationsgeschwindigkeit einer Siliconkautschukmasse, die einen erfindungsgemäßen Härter umfasst, als auch die Eigenschaften des entstehenden Polymerisationsproduktes eingestellt werden. Falls gewünscht, kann der erfindungsgemäße Härter Mischungen aus 2, 3, 4, 5 oder mehr Verbindungen der allgemeinen Formeln (I) und (II) umfassen, um so Eigenschaften, wie z.B. die Polymerisationsgeschwindigkeit einer Siliconkautschukmasse, die einen erfindungsgemäßen Härter umfasst, oder die Eigenschaften des entstehenden Polymerisationsproduktes gemäß der Anforderungen der jeweiligen beabsichtigten Anwendung maßgeschneidert einzustellen. Überraschend wurde gefunden, daß der erfindungsgemäße Härter eine verbesserte Wirkung beim Härten von Siliconkautschukmassen in Gegenwart von Wasser oder Luftfeuchtigkeit bei Raumtemperatur hat. Insbesondere hat auch er den Vorteil, daß bei Hydrolyse nur Alkyllactat-Moleküle, wie beispielsweise Ethyllactat-Moleküle (2-Hydroxypropionsäureethylester-Moleküle) abgegeben werden.
Der neue Härter ist bis -20°C flüssig und deshalb bequem zu verarbeiten.

Die Polymerisationsprodukte, die unter Verwendung des erfindungsgemäßen Härters hergestellt werden, sind stippenfrei, transparent und klar.

In einer bevorzugten Weiterbildung umfasst der erfindungsgemäße Härter eine, zwei oder drei Verbindungen mit der allgemeinen Formel (I) und eine, zwei oder drei davon unterschiedliche Verbindungen mit der allgemeinen Formel (II), besonders bevorzugt eine Verbindung mit der allgemeinen Formel (I) und zusätzlich zwei Verbindungen mit der allgemeinen Formel (II). Beispielsweise kann der erfindungsgemäße Härter Vinyl-tris(ethyllactato)silan als eine Verbindung mit der allgemeinen Formel (I) und Methyl-tris(ethyllactato)silan als eine Verbindung mit der allgemeinen Formel (II) umfassen, oder Vinyl-tris(ethyllactato)silan als eine Verbindung mit der allgemeinen Formel (I) und Methyl-tris(ethyllactato)silan und Tetra-(ethyllactato)-silan als zwei Verbindungen mit der allgemeinen Formel (II) umfassen.

Durch einen erfindungsgemäßen Härter, der neben mindestens einer Verbindung mit der allgemeinen Formel (I) zusätzlich mindestens eine Verbindung mit der allgemeinen Formel (II) umfasst, können vorteilhaft sowohl die Polymerisationsgeschwindigkeit einer Siliconkautschukmasse, die einen erfindungsgemäßen Härter umfasst, als auch die Eigenschaften des entstehenden Polymerisationsproduktes eingestellt werden. Falls gewünscht, kann der erfindungsgemäße Härter zusätzlich 1, 2, 3 oder mehr Verbindungen der allgemeinen Formel (II) umfassen, um so Eigenschaften, wie z.B. die Polymerisationsgeschwindigkeit einer Siliconkautschukmasse, die einen erfindungsgemäßen Härter umfasst, oder die Eigenschaften des entstehenden Polymerisationsproduktes gemäß der Anforderungen der jeweiligen beabsichtigten Anwendung maßgeschneidert einzustellen.

Überraschend wurde gefunden, daß der erfindungsgemäße Härter, der zusätzlich mindestens eine Verbindung mit der allgemeinen Formel (II) umfasst, eine weiter verbesserte Wirkung beim Härten von Siliconkautschukmassen in Gegenwart von Wasser oder Luftfeuchtigkeit bei Raumtemperatur hat. Weiterhin hat der erfindungsgemäße Härter den Vorteil, daß bei Hydrolyse nur Alkyllactat-Moleküle, wie beispielsweise Ethyllactat-Moleküle (2-Hydroxypropionsäureethylester-Moleküle) abgegeben werden.

Der neue Härter ist bis -20°C flüssig und deshalb bequem zu verarbeiten. Die Polymerisationsprodukte, die unter Verwendung des erfindungsgemäßen Härters hergestellt werden, sind stippenfrei, transparent und klar.

In einer besonders bevorzugten Ausführungsform umfasst der erfindungsgemäße Härter neben mindestens einer Verbindung mit der allgemeinen Formel (I) mindestens eine Verbindung mit der allgemeinen Formel (II), in der der bzw. die Reste R⁴ Alkylreste sind, und besonders bevorzugt mindestens eine Verbindung mit der allgemeinen Formel (II), in der der bzw. die Reste R⁴ Alkylreste ist bzw. sind und der bzw. die Reste R³ Ethyllactatoreste sind.

In einer anderen besonders bevorzugten Ausführungsform umfasst der erfindungsgemäße Härter zusätzlich mindestens eine Verbindung mit der allgemeinen Formel (II), die aus
Methyl-tris(ethyllactato)silan (Formel 2),
Ethyl-tris(ethyllactato)silan (Formel 3) und Tetra(elthyllactato)silan (Formel 4) ausgewählt wird.

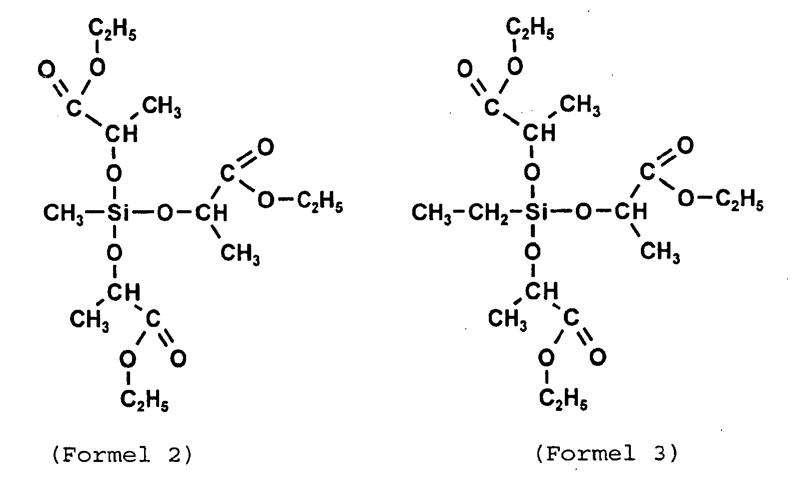

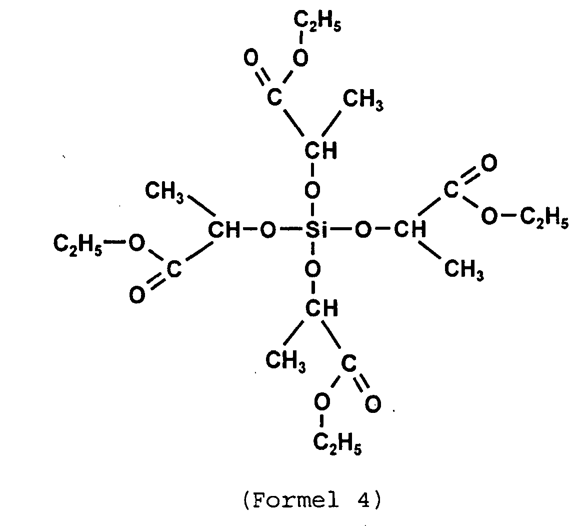

Mit einem erfindungsgemäßen Härter, der zusätzlich auch Methyl-tris(ethyllactato)silan und/oder Ethyl-tris(ethyllactato)silan und/oder Tetra(ethyllactato)silan umfasst, wird eine weiter verbesserte Wirkung beim Härten von Siliconkautschukmassen in Gegenwart von Wasser oder Luftfeuchtigkeit erzielt. Er hat alle vorgenannten positiven Eigenschaften einschließlich der, daß er bei der Hydrolyse der Verbindungen mit den Formeln (2), (3) und (4) nur das ungefährliche Ethyllactat freisetzt. Da auch die Verbindung mit der allgemeinen Formel (I) bei der Hydrolyse nur Ethyllactat freisetzt, setzt ein derartiger erfindungsgemäßer Härter ausschließlich Ethyllactat frei. Darüber hinaus besteht auch die Möglichkeit einer Feineinstellung der Eigenschaften des Härters beim Aushärten (z.B. Hautbildungszeit, Klebefreizeit, Frühbeanspruchung etc.) durch eine entsprechende Wahl der prozentualen Anteile seiner Komponenten. Insbesondere bevorzugt ist ein Härter, der neben Vinyl-tris(ethyllactato)silan Methyl-tris(ethyllactato)silan umfasst, und ein Härter, der neben Vinyl-tris(ethyllactato)silan Methyl-tris(ethyllactato)silan und Tetra-(ethyllactato)-silan umfasst.

In diesem Sinne bevorzugt umfasst der Härter eine Verbindung mit der allgemeinen Formel (I) in einem Anteil von 20 bis 80 Gew.-%, weiter bevorzugt 30 bis 70 Gew.-%, noch weiter bevorzugt 30 bis 50 Gew.-% und besonders bevorzugt 30 oder 50 Gew.-%. Vorzugsweise umfasst der Härter daneben mindestens eine Verbindung mit der allgemeinen Formel (II) in einem Anteil von 20 bis 80 Gew.-%, weiter bevorzugt 30 bis 75 Gew.-%, noch weiter bevorzugt 50 bis 70 Gew.-% und besonders bevorzugt 50 oder 70 Gew.-%. Der Härter kann daneben auch weitere vernetzungsfähige Verbindungen auf Basis von Verbindungen der allgemeinen Formeln (I) oder (II) umfassen. In einer besonders bevorzugten Ausführungsform umfasst der erfindungsgemäße Härter 50 Gew.-% einer Verbindung mit der allgemeinen Formel (I) und 50 Gew.-% einer Verbindung mit der allgemeinen Formel (II). Ein Beispiel dieser Ausführungsform ist ein erfindungsgemäßer Härter, der 50 Gew.-% Methyl-tris(ethyllactato)silan und 50 Gew.-% Vinyl-tris(ethyllactato)silan umfasst. In einer anderen bevorzugten Ausführungsform umfasst der erfindungsgemäße Härter 30 Gew.-% einer Verbindung mit der allgemeinen Formel (I) und 70 Gew.-% einer Verbindung mit der allgemeinen Formel (II). Ein Beispiel dieser Ausführungsform ist ein erfindungsgemäßer Härter, der 70 Gew.-% Methyl-tris(ethyllactato)silan und 30 Gew.-% Vinyl-tris(ethyllactato)silan umfasst. Ein Beispiel für einen erfindungsgemäßen Härter, der mehr als eine Verbindung mit der allgemeinen Formel (II) umfasst, ist ein Härter, der 40-45 Gew.-% Vinyl-tris(ethyllactato)silan, 40-45 Gew.-% Methyl-tris-(ethyllactato)-silan und 10-20 Gew.-% Tetra-(ethyllactato)-silan umfasst.

Erfindungsgemäß wird der erfindungsgemäße Härter zum Härten einer Siliconkautschukmasse verwendet. Dazu wird im Sinne dieser Erfindung eine Zusammensetzung hergestellt, die den erfindungsgemäßen Härter und eine geeignete Siliconkautschukmasse bzw. deren Vorstufen umfasst.

Entsprechend umfasst eine erfindungsgemäße Zusammensetzung den oben beschriebenen erfindungsgemäßen Härter und zumindest eine Organosiliconverbindung, vorzugsweise den oben beschriebenen erfindungsgemäßen Härter und zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein α ,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α ,ω-dihydroxyl-terminierte Polydialkenylsiloxane oder α ,ω-dihydroxyl-terminierte Polydiarylsiloxane. Neben homopolymeren α ,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α ,ω-dihydroxyl-terminierte Polydiorganosiloxane mit teilfluorierten oder perfluorierten organischen Substituenten verwendet werden oder α,ω-dihydroxyl-terminierte Polydiorganosiloxane mit durch Hydroxyl- und/oder Aminogruppensubstituierten organischen Substituenten an den Siliciumatomen.

Besonders bevorzugte Beispiele für eine Organosiliconverbindung sind α,ω-dihydroxyl-terminierte Polydialkylsiloxane, wie z.B. α,ω-dihydroxyl-terminierte Polydimethylsiloxane, α ,ω-dihydroxyl-terminierte Polydiethylsiloxane oder α ,ω-dihydroxyl-terminierte Polydivinylsiloxane, sowie α ,ω-dihydroxyl-terminierte Polydiarylsiloxane, wie z.B. α ,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt.

Es können auch Mischungen aus Polydiorganosiloxanen mit unterschiedlichen Viskositäten verwendet werden.

Falls gewünscht, kann die erfindungsgemäße Zusammensetzung weitere übliche Zusätze umfassen. Übliche Zusätze sind Füllstoffe, Farbmittel, Weichmacher, Thixotrophiermittel, Benetzungsmittel, Haftmittel, Katalysatoren und andere.

Als Füllstoffe können sowohl verstärkende als auch nichtverstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotrophiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt., insbesondere von 100 cSt, Paraffinöle und polysubstituierte Alkylbenzole.

Als Benetzungs- und/oder Haftmittel (Haftvermittler) werden bevorzugt an sich bekannte Silanverbindungen mit reaktive Gruppen tragenden organischen Substituenten am Siliciumatom verwendet, die sich von den erfindungsgemäß verwendeten Organosiliconverbindungen unterscheiden, wie z.B. Organosilane mit reaktiven Amin-, Carbonsäure-, Epoxy- oder Thiolgruppen. Besonders bevorzugte Beispiele umfassen Aminosilane, wie Aminoethyl-aminopropyl-trialkoxysilane. Konkrete Beispiele besonders bevorzugter Haftmittel (Haftvermittler) sind 3-Aminopropyl-triethoxysilan, 3-Aminopropyl-trimethoxysilan, Aminoethylaminopropyl-trimethoxysilan, Butylaminopropyltriethoxysilan, Butylaminopropyl-trimethoxysilan, Propylaminopropyl-triethoxysilan, Propylaminopropyltrimethoxysilan, N-Cyclohexyl-3-aminopropyl-trimethoxysilan, N-Cyclohexyl-3-aminopropyl-triethoxysilan, und Co-oligomeric diamino/alkyl functional silan, welches als Dynasylan 1146 von Degussa erhältlich ist.

Bevorzugt können metallorganische Katalysatoren verwendet werden, wie sie üblicherweise für kondensationsvernetzende Polysiloxane eingesetzt werden. Bevorzugte Katalysatoren sind zinnorganische Verbindungen, wie beispielsweise Dibutylzinndilaurat, Dibutylzinndiacetat und Zinn(II)octoat. Besonders bevorzugte Katalysatoren sind Alkyl-zinn-carboxylate, wie beispielsweise Dibutyl-zinn-dilaurat, Dibutyl-zinndivaleriat, Dibutyl-zinn-diacetat, Dibutyl-zinn-dineodecanoat, Dibutyl-zinn-diacetylacetonat, Dioctyl-zinn-bis(2-ethylhexanoat), Dibutyl-zinn-dimaleat und Butyl-zinn-tris(2-ethylhexanoat). Titan-, Zirkonium- oder Aluminium-basierte Verbindungen können ebenfalls als Katalysatoren verwendet werden.

Es wurde gefunden, daß die Zusammensetzung unter Feuchtigkeitsausschluß über Zeitspannen von mehr als 12 Monaten aufbewahrt werden kann und unter dem Einfluß von Wasser oder Luftfeuchtigkeit bei Raumtemperatur polymerisiert.

Weiterhin ist vorteilhaft, daß die erfindungsgemäße Zusammensetzung beim Härten zu einer Siliconkautschukmasse nur 2-Hydroxypropionsäurealkylester, wie beispielsweise 2-Hydroxypropionsäureethylester (Ethyllactat) abgeben, welches im Gegensatz zu Oxim-Verbindungen, wie z.B. Butan-2-onoxim gesundheitlich unbedenklich ist, weder korrosiv noch aggressiv gegenüber Werkstoffen wie Metallen, Mörtel oder Stein (Marmor usw.) ist und einen angenehmen Geruch hat. Die ausgehärtete Masse ist stippenfrei, transparent und klar.

Bevorzugt umfasst die erfindungsgemäße Zusammensetzung 40 bis 90 Gew.-% der Organosiliconverbindung und 1 bis 15 Gew.-% des erfindungsgemäßen Härters, wobei der Rest jeweils durch übliche Zusätze ausgemacht wird. Weiter bevorzugt umfasst die Zusammensetzung 50 bis 80 Gew.-% der Organosiliconverbindung und 1 bis 15 Gew.-% des erfindungsgemäßen Härters, und besonders bevorzugt 50 bis 70 Gew.-% der Organosiliconverbindung und 3 bis 10 Gew.-% des erfindungsgemäßen Härters, wobei der Rest jeweils durch übliche Zusätze ausgemacht wird.

Ebenfalls ist Gegenstand der Erfindung eine Verwendung der erfindungsgemäßen Zusammensetzung als Dichtungsmittel, Klebstoff oder Beschichtungsmittel. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

Ein weiterer Gegenstand der Erfindung ist ein Verfahren zur Herstellung eines erfindungsgemäßen Härters. Insbesondere betrifft das erfindungsgemäße Verfahren die Herstellung einer Verbindung mit der allgemeinen Formel (I). Nach dem erfindungsgemäßen Verfahren wird eine Verbindung mit der allgemeinen Formel (I) hergestellt, indem eine Verbindung mit der allgemeinen Formel SiX₃R² (III) mit drei Äquivalenten 2-Hydroxypropionsäurealkylester, bevorzugt 2-Hydroxypropionsäureethylester (Ethyllactat), zur Reaktion gebracht wird. Der Rest R² in der Verbindung mit der allgemeinen Formel (III) wird aus einem Alkenylrest ausgewählt, wobei die jeweiligen Reste wie oben definiert werden. Der Rest X (die Austritts- bzw. Abgangsgruppe) in der Verbindung mit der allgemeinen Formel (III) wird aus einer üblichen Austrittsgruppe ausgewählt, welche mit einer freien Hydroxyfunktion eines anderen Moleküls, wie z.B. eines Alkohols mit der allgemeinen Formel R'-OH, unter Freisetzung des Moleküls H-X reagiert, wobei eine Si-O-R'-Bindung zwischen dem Siliciumatom der Verbindung mit der allgemeinen Formel (III) und dem addierten Molekülrest ausgebildet wird. Bevorzugt ist die Austrittsgruppe X ein Alkoxyrest mit mindestens einem Kohlenstoffatom oder ein Halogenatom, insbesondere ein Chloratom.

Eine Verbindung mit der allgemeinen Formel (II) kann in einem analogen Herstellungsverfahren hergestellt werden, wenn eine entsprechende Verbindung mit der allgemeinen Formel SiXₙ(R⁴)ₘ (IV), mit n = 1, 2, 3 oder 4, und m = (4-n), mit n Äquivalenten 2-Hydroxypropionsäurealkylester, bevorzugt 2-Hydroxypropionsäureethylester (Ethyllactat), zur Reaktion gebracht wird, wobei die Reste X und R⁴ wie oben definiert werden.

### Beispiele

### Beispiel 1:

### Allgemeine Synthese einer Verbindung mit der Formel (I)

In einem 4000 ml-Vierhalskolben, ausgestattet mit KPG-Rührer, Tropftrichter, Rückflusskühler, Thermometer und Wasserbadkühlung, werden 500,0 g Ethyllactat (4,23 mol), 1500,0 g Toluol und 432,6 g Triethylamin (4,27 mol) unter Stickstoffatmosphäre vorgelegt. Anschließend werden unter Wasserbadkühlung 226,1 g Vinyltrichlorsilan (1,40 mol) so zugegeben, dass die Temperatur 30°C nicht übersteigt. Nach Beendigung der Zugabe wird für 3 Stunden bei Raumtemperatur gerührt und anschließend der gebildete Feststoff abfiltriert und mit Toluol gewaschen. Die vereinigten Filtrate werden in einer Destillationsapparatur vorgelegt und das Lösungsmittel Toluol wird unter Vakuum abgetrennt.
Falls notwendig, kann das Produkt auch destilliert werden. Bedingungen: Sumpftemperatur 160°C, Kopftemperatur 126°C, Vakuum 1-2 mbar

Man erhält 529,0 g Vinyl-tris-(ethyllactato)-silan mit einer durch GC bestimmten Reinheit von 92,5%. Dies entspricht einer Ausbeute von 93% der Theorie, bezogen auf Vinyltrichlorsilan.

Zur Bestimmung der Reinheit der hergestellten Härter-Verbindungen mit den allgemeinen Formeln (I) und (II) wurde eine Kapillar-Gaschromatograph (Capillary GC) mit einer Säule mit einer Länge von 25 m und einem Innendurchmesser (ID) von 0,25 mm (FD: 0,5 um) und einem FID-Detektor verwendet. Als Trägergas wurde Helium verwendet und der Split betrug 150 ml/min. Die Proben wurden ohne Probenvorbereitung in Direkteinspritzung mit einer Probenmenge von 0,3 µl zugeführt.

### Beispiel 2:

### Allgemeine Synthese einer Verbindung mit der Formel (II)

In einem 4000 ml-Vierhalskolben, ausgestattet mit KPG-Rührer, Tropftrichter, Rückflusskühler, Thermometer und Wasserbadkühlung, werden 500,0 g Ethyllactat (4,23 mol), 1500,0 g Toluol und 432,6 g Triethylamin (4,27 mol) unter Stickstoffatmosphäre vorgelegt. Anschließend werden unter Wasserbadkühlung 209,0 g Methyltrichlorsilan (1,40 mol) so zugegeben, dass die Temperatur 30°C nicht übersteigt. Nach Beendigung der Zugabe wird für 3 Stunden bei Raumtemperatur gerührt und anschließend der gebildete Feststoff abfiltriert und mit Toluol gewaschen. Die vereinigten Filtrate werden in einer Destillationsapparatur vorgelegt und das Lösungsmittel Toluol wird unter Vakuum abgetrennt. Falls notwendig, kann das Produkt auch destilliert werden. Bedingungen: Sumpftemperatur 160°C, Kopftemperatur 130°C, Vakuum 1-2 mbar

Man erhält 502,0 g Methyl-tris-(ethyllactato)-silan mit einer durch GC (s. Beispiel 1) bestimmten Reinheit von 93%. Dies entspricht einer Ausbeute von 91% der Theorie, bezogen auf Methyltrichlorsilan.

Ethyl-tris-(ethyllactato)-silan wird in einer analogen Synthese hergestellt, nur dass 228,9 g Ethyltrichlorsilan (1,40 mol) zugegeben werden. Man erhält 537,6 g Ethyl-tris-(ethyllactato)-silan mit einer durch GC (s. Beispiel 1) bestimmten Reinheit von 93,5%. Dies entspricht einer Ausbeute von 94% der Theorie, bezogen auf Ethyltrichlorsilan.

Die Herstellung von Phenyl-tris-(ethyllactato)-silan erfolgt analog.

Tetra-(ethyllactato)-silan wird in einer analogen Synthese hergestellt, nur dass 237,9 g Tetrachlorsilan (1,40 mol) zugegeben werden und 668,1g Ethyllactat (5,66 mol ) vorgelegt werden. Man erhält 650 g Tetra-(ethyllactato)-silan mit einer durch GC (s. Beispiel 1) bestimmten Reinheit von 94,0%. Dies entspricht einer Ausbeute von 93,5% der Theorie, bezogen auf Tetrachlorsilan.

### Beispiel 3 und Vergleichsbeispiele 1 bis 4 Dichtstoffe mit einem Härter mit der Formel (I) bzw. (II)

Es wird eine Siliconkautschukgrundmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90,0 g | hochdisperse Kieselsäure (Cabosil 150) |
| 10,0 g | Haftvermittler (Aminoalkyl-trialkoxysilan) |
| 0,2 g | Katalysator (Alkyl-zinn-carboxylat) |

Als Härter werden jeweils 40 g einer Verbindung mit der Formel (I) (Beispiel 3) bzw. einer Verbindung mit der Formel (II) (Vergleichsbeispiele 1 bis 4) wie folgt zugegeben:

| | |
|---|---|
| Beispiel 3: | Vinyl-tris(ethyllactato)silan |
| Vergleichsbeispiel 1: | Methyl-tris(ethyllactato)silan |
| Vergleichsbeispiel 2: | Ethyl-tris(ethyllactato)silan |
| Vergleichsbeispiel 3: | Phenyl-tris(ethyllactato)silan |
| Vergleichsbeispiel 4: | Tetra(ethyllactato)silan |

Nach Ausbringung an Luft werden die Eigenschaften Hautbildungszeit, Klebfreizeit und Durchhärtung nach üblichen Verfahren bestimmt. Alle Messungen wurden bei Bedingungen von 23°C und 50% Luftfeuchtigkeit durchgeführt.
Die Ergebnisse werden in Tabelle 1 gezeigt.

**Tabelle 1**

| Nr. | Hautbildungszeit (min) | Klebfreizeit (min) | Durchhärtung (h) |
|---|---|---|---|
| Beispiel 3 | 2 | 10 | 10 |
| Vergleichsbeispiel 1 | 120 | >1000 | >96 |
| Vergleichsbeispiel 2 | 110 | >1000 | >96 |
| Vergleichsbeispiel 3 | 90 | >1000 | >96 |
| Vergleichsbeispiel 4 | -* | -* | -* |

| | | | |
|---|---|---|---|
| * - nicht messbar, da der Dichtstoff nach Mischen mit der Siliconkautschukgrundmischung bereits in der Kartusche aushärtet Hautbildungszeit: Zeit, zu der an der Oberfläche eines Probenstranges eine vollständige Schicht aus verfestigtem Material (Haut) beobachtet wurde. Klebfreizeit: Zeit, zu der die Oberfläche eines Probenstranges keine Klebrigkeit mehr aufweist. Durchhärtung: Auftragung des Dichtstoffes mit 4 mm Höhe auf Glas; Zeitdauer der Durchhärtung bis zur Glasplatte. | | | |

Aus den Ergebnissen in Tabelle 1 ist ersichtlich, dass der erfindungsgemäße Härter in Beispiel 3 zu einem Dichtstoff mit brauchbaren Eigenschaften führt. Dagegen ergeben die Härter in den Vergleichsbeispielen 1 bis 4 keine geeigneten Dichtstoffe. Die Dichtstoffe der Vergleichsbeispiele 1, 2 und 3 haben eine sehr lange Hautbildungszeit und ihre Klebefreizeit und Durchhärtung sind länger als für einen Dichtstoff annehmbar. Die Messungen wurden nach 1000 min (Klebfreizeit) bzw. 96 h (Durchhärtung) abgebrochen, da Dichtstoffe mit Eigenschaften außerhalb dieses Bereichs nicht brauchbar sind. In Vergleichsbeispiel 4 führte bereits die Mischung des Härters zu der Siliconkautschukgrundmasse zu einer Durchhärtung, so dass dieser Dichtstoff nicht verarbeitet werden konnte.

### Beispiele 4 bis 6 und Vergleichsbeispiele 5 bis 7

### Dichtstoffe mit zwei Härtern mit der Formel (I) bzw. (II)

Es wird eine Siliconkautschukgrundmischung mit einer Formulierung wie für Beispiel 3 beschrieben hergestellt.

Als Härter werden jeweils 40 g einer Mischung aus einer Verbindung mit der Formel (I) und einer Verbindung mit der Formel (II) (Beispiele 4 bis 6) bzw. aus einer Mischung aus zwei Verbindungen mit der Formel (II) (Vergleichsbeispiele 5 bis 7) wie folgt zugegeben:

| | |
|---|---|
| Beispiel 4: | 50% Vinyl-tris(ethyllactato)silan |
| | 50% Methyl-tris(ethyllactato)silan |
| Beispiel 5: | 50% Vinyl-tris(ethyllactato)silan |
| | 50% Ethyl-tris(ethyllactato)silan |
| Beispiel 6: | 50% Vinyl-tris(ethyllactato)silan |
| | 50% Phenyl-tris(ethyllactato)silan |
| Vergleichsbeispiel 5: | 50% Methyl-tris(ethyllactato)silan |
| | 50% Ethyl-tris(ethyllactato)silan |
| Vergleichsbeispiel 6: | 50% Methyl-tris(ethyllactato)silan |
| | 50% Phenyl-tris(ethyllactato)silan |
| Vergleichsbeispiel 7: | 50% Methyl-tris(ethyllactato)silan |
| | 50% Tetra(ethyllactato)silan |

Nach Ausbringung an Luft werden die Eigenschaften Hautbildungszeit, Klebfreizeit und Durchhärtung nach üblichen Verfahren bestimmt. Alle Messungen wurden bei Bedingungen von 23°C und 50% Luftfeuchtigkeit durchgeführt.
Die Ergebnisse werden in Tabelle 2 gezeigt.

**Tabelle 2**

| Nr. | Hautbildungszeit (min) | Klebfreizeit (min) | Durchhärtung (h) |
|---|---|---|---|
| Beispiel 4 | 12 | 60 | 24 |
| Beispiel 5 | 10 | 50 | 24 |
| Beispiel 6 | 7 | 40 | 20 |
| Vergleichsbeispiel 5 | 120 | >1000 | >96 |
| Vergleichsbeispiel 6 | 110 | >1000 | >96 |
| Vergleichsbeispiel 7 | -* | -* | -* |

| | | | |
|---|---|---|---|
| * - nicht messbar, da der Dichtstoff nach Mischen mit der Siliconkautschukgrundmischung bereits in der Kartusche aushärtet Hautbildungszeit: Zeit, zu der an der Oberfläche eines Probenstranges eine vollständige Schicht aus verfestigtem Material (Haut) beobachtet wurde. Klebfreizeit: Zeit, zu der die Oberfläche eines Probenstranges keine Klebrigkeit mehr aufweist. Durchhärtung: Auftragung des Dichtstoffes mit 4 mm Höhe auf Glas; Zeitdauer der Durchhärtung bis zur Glasplatte. | | | |

Aus den Ergebnissen in Tabelle 2 ist ersichtlich, dass der erfindungsgemäße Härter in den Beispielen 4, 5 und 6 zu einem Dichtstoff mit sehr guten Eigenschaften führt, welche mit denen von üblichen Dichtstoffen vergleichbar ist. Üblicherweise werden als Eigenschaften für Silicondichtstoffe eine Hautbildungszeit von 5 bis 15 Minuten, eine Klebfreizeit von 60 bis 120 Minuten und eine Durchhärtung von maximal 48 Stunden gewünscht.

Im Gegensatz dazu ergeben die Härter in den Vergleichsbeispielen 5 bis 7 keine geeigneten Dichtstoffe. Die Dichtstoffe der Vergleichsbeispiele 5 und 6 haben eine sehr lange Hautbildungszeit und ihre Klebefreizeit und Durchhärtung sind länger als für einen Dichtstoff annehmbar. Die Messungen wurden nach 1000 min (Klebfreizeit) bzw. 96 h (Durchhärtung) abgebrochen, da Dichtstoffe mit Eigenschaften außerhalb dieses Bereichs nicht brauchbar sind. In Vergleichsbeispiel 7 führte bereits die Mischung des Härters zu der Siliconkautschukgrundmasse zu einer Durchhärtung, so dass dieser Dichtstoff nicht verarbeitet werden konnte.

### Beispiel 7:

### Dichtstoffrezeptur A

Es wird eine Siliconkautschukmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90,0 g | hochdisperse Kieselsäure (Cabosil 150) |
| 10,0 g | Haftvermittler (Aminoalkyl-trialkoxysilan) |
| 0,2 g | Katalysator (Alkyl-zinn-carboxylat) |

Als Härter A wird eine Mischung gemäß folgender Formulierung zugegeben:

| | |
|---|---|
| 20,0 g | Vinyl-tris(ethyllactato)silan |
| 20,0 g | Methyl-tris(ethyllactato)silan |

Der Dichtstoff hat nach Ausbringung an Luft:
- eine Hautbildungszeit von 12 min
- eine Klebfreizeit von 60 min
- eine Frühbeanspruchung nach 70 min
- eine vollständige Aushärtung nach 24 h
- ein transparentes Aussehen
- einen angenehmen Geruch
- eine Shore-Härte A von 22

Die Eigenschaften Hautbildungszeit, Klebfreizeit, Frühbeanspruchung, vollständige Aushärtung, Aussehen, Geruch und Shore-Härte A wurden nach üblichen Verfahren bestimmt. Alle Messungen wurden bei Bedingungen von 23°C und 50% Luftfeuchtigkeit durchgeführt.

Zur Bestimmung der Hautbildungszeit wurde die Zeit gemessen, zu der an der Oberfläche eines Probenstranges eine vollständige Schicht aus verfestigtem Material (Haut) beobachtet wurde.

Zur Bestimmung der Klebfreizeit wurde die Zeit gemessen, zu der die Oberfläche eines Probenstranges keine Klebrigkeit mehr aufweist.

Zur Bestimmung der Frühbeanspruchung wurde ein Siliconstreifen von 10 mm Höhe auf einen Blechstreifen ausgebracht. Die Belastbarkeit wird durch ein Abknicken des Streifens um 90° getestet. Angegeben wird die Zeit, bei der die Haut des Siliconstreifens nicht reißt.

Zur Bestimmung der vollständigen Aushärtung wird der Dichtstoff mit 4 mm Höhe auf eine Glasplatte aufgetragen und die Zeitdauer der Durchhärtung bis zur Glasplatte gemessen.

Aussehen und Geruch wurden durch organoleptische Prüfung bestimmt.

Die Shore-Härte A wurde mit einem Zwick-Roell-Messgerät (Bez.: ASTM D 2240; DIN 53505; ISO 868) bestimmt.

### Beispiel 8:

### Dichtstoffrezeptur B

Es wird eine Siliconkautschukmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90,0 g | hochdisperse Kieselsäure (Cabosil 150) |
| 10,0 g | Haftvermittler (Aminoalkyl-trialkoxysilan) |
| 0,2 g | Katalysator (Alkyl-zinn-carboxylat) |

Als Härter B wird eine Mischung gemäß folgender Formulierung zugegeben:

| | |
|---|---|
| 17,5 g | Vinyl-tris(ethyllactato)silan |
| 17,5 g | Methyl-tris(ethyllactato)silan |
| 5,0 g | Tetra(ethyllactato)silan |

Der Dichtstoff hat nach Ausbringung an Luft:
- eine Hautbildungszeit von 11 min
- eine Klebfreizeit von 50 min
- eine Frühbeanspruchung nach 60 min
- eine vollständige Aushärtung nach 24 h
- ein transparentes Aussehen
- einen angenehmen Geruch
- eine Shore-Härte A von 24

Messbedingungen wie in Beispiel 7 beschrieben.

### Vergleichsbeispiel 8:

### Dichtstoffrezeptur mit Oximhärter (2-Butanonoxim; MEKO):

Es wird eine Siliconkautschukmischung gemäß folgender Formulierung hergestellt:

| | |
|---|---|
| 585,0 g | α,ω-dihydroxyl-terminiertes Polydimethylsiloxan mit Viskosität 80.000 cSt |
| 260,0 g | Polydimethylsiloxan mit Viskosität 100 cSt |
| 90 ,0 g | hochdisperse Kieselsäure (Cabosil 150) |
| 10, g | Haftvermittler (Aminopropyl-triethoxysilan) |
| 0,2 g | Katalysator (Alkyl-zinn-carboxylat) |

Als Härter wird eine Mischung gemäß folgender Formulierung zugegeben:

| | |
|---|---|
| 13,5 g | Vinyl-tris-(2-Butanonoximo)silan (VOS) |
| 32,0 g | Methyl-tris-(2-Butanonoximo)silan (MOS) |

Der Dichtstoff hat nach Ausbringung an Luft:
- eine Hautbildungszeit von 13 min
- eine Klebfreizeit von 55 min
- eine Frühbeanspruchung nach 60 min
- eine vollständige Aushärtung nach 24 h
- ein transparentes Aussehen
- einen unangenehmen (oximartigen) Geruch
- eine Shore-Härte A von 23

Messbedingungen wie in Beispiel 7 beschrieben.

Die in Vergleichsbeispiel 8 hergestellte Rezeptur entspricht einer typischen Rezeptur eines Dichtstoffes auf Basis einer RTV-Siliconkautschukmasse, die bezüglich ihrer Eigenschaften durch langjährige Optimierung eingestellt wurde und gegenwärtig im Stand der Technik eingesetzt wird. Dieser Dichtstoff setzt bei der Ausbringung an Luft 2-Butanonoxim (MEKO) frei, und ist daher vom Standpunkt der Toxikologie bedenklich.

Ein Vergleich der Eigenschaften der in den erfindungsgemäßen Beispielen 7 und 8 hergestellten Dichtstoffe mit den Eigenschaften des Dichtstoffes des Vergleichsbeispiels 8 zeigt, dass mit dem erfindungsgemäßen Härter Dichtstoffe hergestellt werden können, deren Eigenschaften mindestens denen des Standes der Technik entsprechen, welche ein Ergebnis langjähriger Optimierung sind. Jedoch haben die Dichtstoffe der erfindungsgemäßen Beispiele 7 und 8 den zusätzlichen Vorteil, dass sie im Gegensatz zu dem des Vergleichsbeispiels 8, bei Ausbringung an Luft ausschließlich Ethyllactat freisetzen, was nicht nur toxikologisch unbedenklich ist, sondern auch dem Dichtstoff einem angenehmen Geruch verleiht.

## Patentansprüche

1. Härter für Siliconkautschukmassen, umfassend mindestens eine Verbindung mit der allgemeinen Formel Si(R¹)₃R² (I),
wobei die Reste R¹ 2-Hydroxypropionsäurealkylester-Reste mit der allgemeinen Formel -OCH(CH₃)COOR sind, wobei der Rest R ein optional substituierter, geradkettiger oder verzweigter Alkylrest mit 1 bis 4 Kohlenstoffatomen ist und
wobei der Rest R² ausgewählt wird aus der Gruppe, bestehend aus einem optional substituierten, geradkettigen oder verzweigten Alkenylrest mit mindestens zwei Kohlenstoffatomen; und
eine davon unterschiedliche Verbindung mit der allgemeinen Formel Si(R³)ₙR⁴ₘ (II), mit n = 1, 2, 3 oder 4, und m = (4-n), wobei der oder die Reste R³ 2-Hydroxypropionsäurealkylester-Reste mit der allgemeinen Formel -OCH(CH₃)COOR sind, wobei der Rest R ein optional substituierter, geradkettiger oder verzweigter Alkylrest mit 1 bis 4 Kohlenstoffatomen ist und wobei der oder die Reste R⁴ unabhängig voneinander ausgewählt werden aus der Gruppe, bestehend aus einem optional substituierten, geradkettigen oder verzweigten Alkylrest mit mindestens einem Kohlenstoffatom, einem optional substituierten, geradkettigen oder verzweigten Alkenyl- und Alkinylrest mit jeweils mindestens zwei Kohlenstoffatomen, einem optional substituierten Cycloalkylrest mit mindestens drei Kohlenstoffatomen und einem optional substituierten Arylrest mit mindestens fünf Kohlenstoffatomen.

2. Härter nach Anspruch 1, **dadurch gekennzeichnet, dass** der Rest R² ausgewählt wird aus der Gruppe, bestehend aus einem Allyl- und einem Vinylrest.

3. Härter nach einem der Ansprüche 1 oder 2, **dadurch gekennzeichnet, dass** der Rest R ausgewählt wird aus der Gruppe, bestehend aus einem Methyl-, einem Ethyl-, einem Propyl- und einem Isopropyl-Rest.

4. Härter nach einem der Ansprüche 1, 2, oder 3, **dadurch gekennzeichnet, dass** er die Verbindung Vinyl-tris(ethyllactato)silan umfasst.

5. Härter nach einem der vorherigen Ansprüche, **dadurch gekennzeichnet, dass** der oder die Reste R⁴ ausgewählt werden aus der Gruppe, bestehend aus einem Methyl-, einem Ethyl-, einem Propyl-, einem Isopropyl-, einem Butyl-, einem Isobutyl-, einem sec-Butyl-, einem tert-Butyl-, einem Allyl-, einem Vinyl-, einem Cyclopentyl-, einem Cyclohexyl-, einem Phenyl-, und einem Diphenylrest.

6. Härter nach einem der vorherigen Ansprüche, **dadurch gekennzeichnet, dass** der Rest R ausgewählt wird aus der Gruppe, bestehend aus einem Methyl-, einem Ethyl-, einem Propyl- und einem Isopropyl-Rest.

7. Härter nach einem der vorherigen Ansprüche, **dadurch gekennzeichnet, dass** die Verbindung mit der allgemeinen Formel (II) ausgewählt wird aus der Gruppe, bestehend aus Methyl-tris(ethyllactato)silan, Ethyl-tris(ethyllactato)-silan, und Tetra(ethyllactato)silan.

8. Verwendung eines Härters nach einem der Ansprüche 1 bis 7 zum Härten einer Siliconkautschukmasse.

9. Zusammensetzung, **dadurch gekennzeichnet, dass** sie den Härter nach einem der Ansprüche 1 bis 7 und eine Organosiliconverbindung umfasst.

10. Zusammensetzung nach Anspruch 9, **dadurch gekennzeichnet, dass** die Organosiliconverbindung eine α,ω-dihydroxyl-terminierte Polyorganosiloxanverbindung ist, insbesondere ein α,ω-dihydroxyl-terminiertes Polydialkylsiloxan.

11. Zusammensetzung nach Anspruch 9 oder 10, **dadurch gekennzeichnet, daß** sie 40 bis 90 Gew.-% der Organosiliconverbindung und 1 bis 15 Gew.-% des Härters nach einem der Ansprüche 1 bis 8 umfasst.

12. Verwendung einer Zusammensetzung nach einem der Ansprüche 9, 10 oder 11 als Dichtungsmittel, Klebstoff oder Beschichtungsmittel.

13. Verfahren zur Herstellung eines Härters nach einem der Ansprüche 1 bis 7, umfassend einen Schritt, in dem eine Verbindung der allgemeinen Formel SiX₃R² (III) mit drei Äquivalenten Alkyllactat (Hydroxypropionsäurealkylester) zur Reaktion gebracht wird, wobei der Alkyl-Rest des Alkyllactats eine optional substituierte, geradkettige oder verzweigte Alkylgruppe mit 1 bis 4 Kohlenstoffatomen ist, und wobei der Rest R² aus einem optional substituierten, geradkettigen oder verzweigten Alkenyl- oder Alkinylrest mit jeweils mindestens zwei Kohlenstoffatomen ausgewählt wird, und wobei der Rest X ausgewählt wird aus der Gruppe, bestehend aus einem Alkoxyrest mit mindestens einem Kohlenstoffatom und einem Halogenatom, insbesondere einem Chloratom.

## Claims

1. A hardener for silicone rubber materials, comprising at least one compound having the general formula Si(R¹)₃R² (I), wherein the radicals R¹ are 2-hydroxy-propionic acid alkyl ester radicals having the general formula -OCH(CH₃)COOR, radical R is a straight-chain or branched alkyl radical, optionally substituted, having from 1 to 4 carbon atoms, and radical R² is selected from the group consisting of a straight-chain or branched alkenyl radical, optionally substituted, which has at least two carbon atoms; and
one compound that is different thereof and has the general formula Si(R³₎ₙR4ₘ (II), wherein n = 1, 2, 3, or 4 and
m = (4-n), the radical or radicals R³ being 2-hydroxy-propionic acid alkyl ester radicals of the general formula -OCH(CH₃)COOR, radical R being a straight-chain or branched alkyl radical, optionally substituted, which has from 1 to 4 carbon atoms, and the radical or radicals R⁴ being selected independently of each other from the group consisting of a straight-chain or branched alkyl radical, optionally substituted, which has at least one carbon atom, a straight-chain or branched alkenyl radical or alkinyl radical, optionally substituted, which each have at least two carbon atoms, a cycloalkyl radical, optionally substituted, which has at least three carbon atoms, and an aryl radical, optionally substituted, which has at least five carbon atoms.

2. The hardener according to claim 1, **characterized in that** the radical R² is selected from the group consisting of an allyl radical and a vinyl radical.

3. The hardener according to claim 1 or 2, **characterized in that** the radical R is selected from the group consisting of a methyl radical, an ethyl radical, a propyl radical and an isopropyl radical.

4. The hardener according to any one of claims 1, 2, and 3, **characterized in that** it comprises the compound vinyl-tris-(ethyl lactato)-silane.

5. The hardener according to any one of the preceding claims, **characterized in that** the radical or radicals R⁴ being selected from the group consisting of a methyl radical, an ethyl radical, a propyl radical, an isopropyl radical, a butyl radical, an isobutyl radical, a sec-butyl radical, a tert-butyl radical, an allyl radical, a vinyl radical, a cyclopentyl radical, a cyclohexyl radical, a phenyl radical, and a diphenyl radical.

6. The hardener according to any one of the preceding claims, **characterized in that** the radical R is selected from the group consisting of a methyl radical, an ethyl radical, a propyl radical, and an isopropyl radical.

7. The hardener according to any one of the preceding claims, **characterized in that** the compound of the general formula (II) is selected from the group consisting of methyl-tris-(ethyl lactato)-silane, ethyl-tris-(ethyl lactato)-silane, and tetra-(ethyl lactato)-silane.

8. Use of a hardener according to any one of claims 1 to 7 for curing a silicon rubber material.

9. A composition, **characterized in that** it comprises the hardener according to any one of claims 1 to 7 and an organosilicone compound.

10. The composition according to claim 9, **characterized in that** the organosilicone compound is an α,ω-dihydroxyl-terminated polyorganosiloxane compound, especially an α,ω-dihydroxyl-terminated polydialkylsiloxane.

11. The composition according to claim 9 or 10, **characterized in that** it comprises from 40 to 90% by weight of the organosilicone compound and from 1 to 15% by weight of the hardener claimed in any one of claims 1 to 8.

12. Use of a composition according to any one of claims 9, 10, and 11 as a sealant, adhesive or coating material.

13. A method of preparing a hardener according to any one of claims 1 to 7, comprising a step of reacting a compound of general formula SiX₃R² (III) with three equivalents of alkyl lactate (hydroxy-propionic acid alkyl ester), the alkyl radical of the alkyl lactate being a straight-chain or branched alkyl group, optionally substituted, which has from 1 to 4 carbon atoms, and the radical R² being selected from a straight-chain or branched alkenyl or alkinyl radical, optionally substituted, which each has at least two carbon atoms, and the radical X being selected from the group consisting of an alkoxy radical which has at least one carbon atom and a halogen atom, especially a chlorine atom.

## Revendications

1. Durcisseur pour des masses du caoutchouc de silicone, comprenant au moins un composé de formule générale Si(R¹)₃R² (I), dans lequel les résidus R¹ sont les résidus ester d'alkyle d'acide 2-hydroxypropanoïque avec la formule générale -OCH(CH₃)COOR, et dans lequel le résidu R est un résidu alkyle à chaîne linéaire ou ramifiée avec de 1 à 4 atomes de carbone, optionnellement substitué, et dans lequel le résidu R² est choisi dans le groupe constitué d'un résidu alcényle à chaîne linéaire ou ramifiée avec au moins deux atomes de carbone, optionnellement substitué; et
un composé, qui est différent de l'autre et a la formule générale Si(R₃)ₙR⁴ₘ (II), avec n = 1, 2, 3, ou 4, et
m = (4-n), dans lequel le ou les résidus R³ sont les résidus ester d'alkyle d'acide 2-hydroxypropanoïque avec la formule générale -OCH(CH₃)COOR, et dans lequel le résidu R est un résidu alkyle à chaîne linéaire ou ramifiée avec de 1 à 4 atomes de carbone, optionnellement substitué, et dans lequel le ou les résidus R⁴ sont choisi, indépendamment les uns des autres, dans le groupe constitué d'un résidu alkyle à chaîne linéaire ou ramifiée avec a moins un atome de carbone, optionnellement substitué, d'un résidu alcényle à chaîne linéaire ou ramifiée avec au moins deux atomes de carbone, optionnellement substitué, d'un résidu alkinyle à chaîne linéaire ou ramifiée avec au moins deux atomes de carbone, optionnellement substitué, d'un résidu cycloalkyle avec au moins trois atomes de carbone, optionnellement substitué, et d'un résidu aryle avec au moins cinq atomes de carbone, optionnellement substitué.

2. Durcisseur selon la revendication 1, **caractérisé en ce que** le résidu R² est choisi dans le groupe constitué d'un résidu allyle et d'un résidu vinyle.

3. Durcisseur selon l'une quelconque des revendications 1 ou 2, **caractérisé en ce que** le résidu R est choisi dans le groupe constitué d'un résidu méthyle, d'un résidu éthyle, d'un résidu propyle, et d'un résidu isopropyle.

4. Durcisseur selon l'une quelconque des revendications 1, 2 ou 3, **caractérisé en ce qu'**il contient le composé vinyl-tris(éthyllactato)silane.

5. Durcisseur selon l'une quelconque des revendications précédentes, **caractérisé en ce que** le ou les résidus R⁴ sont choisi dans le groupe constitué d'un résidu méthyle, d'un résidu éthyle, d'un résidu propyle, d'un résidu isopropyle, d'un résidu butyle, d'un résidu isobutyle, d'un résidu sec-butyle, d'un résidu tert-butyle, d'un résidu allyle, d'un résidu vinyle, d'un résidu cyclopentyle, d'un résidu cyclohexyle, d'un résidu phényle, et d'un résidu diphényle.

6. Durcisseur selon l'une quelconque des revendications précédentes, **caractérisé en ce que** le résidu R est choisi dans le groupe constitué d'un résidu méthyle, d'un résidu éthyle, d'un résidu propyle, et d'un résidu isopropyle.

7. Durcisseur selon l'une quelconque des revendications précédentes, **caractérisé en ce que** le composé avec la formule générale (II) est choisi dans le groupe constitué de méthyl-tris(éthyllactato)silane, d'éthyl-tris(éthyllactato)silane et de trtra(éthyllactato)silane.

8. Utilisation d'un durcisseur selon l'une des revendications 1 à 7 pour durcir une masse du caoutchouc de silicone.

9. Composition, **caractérisé en ce qu'**elle contient le durcisseur selon l'une des revendications 1 à 7 et un composé de type organosilicone.

10. Composition selon la revendication 9, **caractérisé en ce que** le composé de type organosilicone est un composé de type polyorganosiloxane à terminaisons α,ω-dihydroxyles, notamment un polydialkylsiloxane à terminaisons α,ω-dihydroxyles.

11. Composition selon la revendication 9 ou 10, **caractérisé en ce qu'**elle contient de 40 à 90 % en poids du composé de type organosilicone et de 1 à 15 % en poids du durcisseur selon l'une des revendications 1 à 8.

12. Utilisation d'une composition selon l'une des revendications 9, 10 ou 11, en tant que matériaux d'étanchéité, que agent adhésif ou que agent de revêtement.

13. Procédé pour la production d'un durcisseur selon l'une des revendications 1 à 7, comprenant une étape, dans laquelle un composé de formule générale SiX₃R² (III) est mis en réaction avec trois équivalents de lactate d'alkyle, dans lequel le résidu alkyle est un résidu alkyle à chaîne linéaire ou ramifiée avec de 1 à 4 atomes de carbone, optionnellement substitué, et dans lequel le résidu R² est choisi parmi un résidu alcényle à chaîne linéaire ou ramifiée, optionnellement substitué, ou un résidu alkinyle à chaîne linéaire ou ramifiée, optionnellement substitué, et dans lequel le résidu X est choisi dans le groupe constitué d'un résidu alkoxy avec au moins un atome de carbone et d'un atome d'halogène, notamment un atome de chlore.
